(19) Europäisches Patentamt
European Patent Office
Office européen des brevets

(11) Veröffentlichungsnummer: **0 491 233 A1**

# (12) EUROPÄISCHE PATENTANMELDUNG

(21) Anmeldenummer: **91120806.4**

(22) Anmeldetag: **04.12.91**

(51) Int. Cl.[5]: **C08G 65/26**, C08G 18/48

(30) Priorität: **18.12.90 DE 4040464**

(43) Veröffentlichungstag der Anmeldung:
**24.06.92 Patentblatt 92/26**

(84) Benannte Vertragsstaaten:
**BE DE ES FR GB IT**

(71) Anmelder: **BASF Aktiengesellschaft**
**Carl-Bosch-Strasse 38**
**W-6700 Ludwigshafen(DE)**

(72) Erfinder: **Hinz, Werner, Dr.**
**Hanns-Fay-Strasse 1**
**W-6710 Frankenthal(DE)**
Erfinder: **Henn, Rolf, Dr.**
**Lilienweg 3**
**W-6834 Ketsch(DE)**
Erfinder: **Leppkes, Reinhard, Dr.**
**Eschkopfstrasse 2**
**W-6712 Bobenheim-Roxheim(DE)**

## (54) Niederviskose hochfunktionelle Polyetherpolyole.

(57) Niederviskose hochfunktionelle Polyetherole, erhältlich durch Umsetzung von 1 mol einer Ausgangsverbindung I, die n = 2 bis 8 mol aktiven Wasserstoff in Form von Hydroxylgruppen, Thiolgruppen, primären Aminogruppen und/oder sekundären Aminogruppen enthält und deren Molmasse bis zu 400 beträgt, mit

a) r = n bis 10n mol eines Epoxides oder mehrerer Epoxide der allgemeinen Formel II

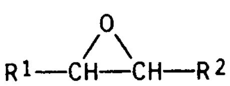

II

in der $R^1$ Wasserstoff oder eine $C_1$-$C_4$-Alkylgruppe und $R^2$ einen der Reste $R^1$ oder die Phenylgruppe, die noch ein oder zwei Halogenatome und/oder $C_1$-$C_4$-Alkylgruppen tragen kann, bedeutet, oder in der $R^1$ und $R^2$ gemeinsam eine Tetramethylengruppierung bedeuten, in Gegenwart einer Base,

b) Überführung von s = 2 bis n mol der im Umsetzungsprodukt vorliegenden Hydroxylgruppen in Alkalimetallalkoholatgruppen und

c) weitere Umsetzung des nach Stufe (b) erhaltenen Produktes oder eines Gemisches mehrerer dieser Produkte mit p mol einer q-wertigen Verbindung III, wobei p mindestens 1/3 mol ist und die Beziehung $p \cdot q$ = s gilt und wobei die Wertigkeit durch reaktionsfähige Chloratome, Bromatome und/oder Epoxygruppen bestimmt ist,

d) Neutralisation des Reaktionsgemisches und Reinigung der Produkte in an sich bekannter Verfahrensweise, mit der Maßgabe, daß n einen Wert von 3 bis 6 bedeutet, wenn die Verbindungen III mindestens eine Epoxygruppe und mindestens ein Chlor- oder Bromatom tragen.

Die niederviskosen Polyetherole eignen sich als Reaktionskomponenten für die Herstellung von Polyurethanen.

EP 0 491 233 A1

Die Vorliegende Erfindung betrifft niederviskose hochfunktionelle Polyetherole, die erhältlich sind durch Umsetzung von 1 mol einer Ausgangsverbindung I, die n = 2 bis 8 mol aktiven Wasserstoff in Form von Hydroxylgruppen, Thiolgruppen, primären Aminogruppen und/oder sekundären Aminogruppen enthält und deren Molmasse bis zu 400 beträgt, mit

a) r = n bis 10n mol eines Epoxides oder mehrerer Epoxide der allgemeinen Formel II

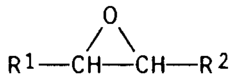

II

in der $R^1$ Wasserstoff oder eine $C_1$-$C_4$-Alkylgruppe und $R^2$ einen der Reste $R^1$ oder die Phenylgruppe, die noch ein oder zwei Halogenatome und/oder $C_1$-$C_4$-Alkylgruppen tragen kann, bedeutet, oder in der $R^1$ und $R^2$ gemeinsam eine Tetramethylengruppierung bedeuten, in Gegenwart einer Base,

b) Überführung von s = 2 bis n mol der im Umsetzungsprodukt vorliegenden Hydroxylgruppen in Alkalimetallalkoholatgruppen und

c) weitere Umsetzung des nach Stufe (b) erhaltenen Produktes oder eines Gemisches mehrerer dieser Produkte mit p mol einer q-wertigen Verbindung III, wobei p mindestens 1/3 mol ist und die Beziehung $p \cdot q = s$ gilt und wobei die Wertigkeit durch reaktionsfähige Chloratome, Bromatome und/oder Epoxygruppen bestimmt ist,

d) Neutralisation des Reaktionsgemisches und Reinigung der Produkte in an sich bekannter Verfahrensweise,

mit der Maßgabe, daß n einen Wert von 3 bis 6 bedeutet, wenn die Verbindungen III mindestens eine Epoxygruppe und mindestens ein Chlor- oder Bromatom tragen.

Außerdem betrifft die Erfindung Polyurethane, die aus mehrwertigen Isocyanaten und den Polyetherolen erhältlich sind.

Die Herstellung von Polyetherpolyolen durch Umsetzung einer Ausgangsverbindung I, die mindestens zwei Hydroxylgruppen, Thiolgruppen und/oder sekundäre Aminogruppen und/oder mindestens eine primäre Aminogruppe enthält, mit einem Epoxid gemäß dem Verfahrensschritt (a) ist aus zahlreichen Veröffentlichungen bekannt. Mit zunehmendem Molekulargewicht des Produktes werden jedoch immer mehr Nebenprodukte gebildet, beispielsweise durch Eliminierungsreaktionen.

In einigen Druckschriften wurde auch die Herstellung von Polyetherpolyolen durch Kopplung von zwei kurzkettigen Polyethern mit einer difunktionellen Verbindung vorgeschlagen.

So sind hochmolekulare Polyetherpolyole, hergestellt durch Umsetzung von Polyoxyalkylenglykolen mit Diglycidylethern, beispielsweise aus folgenden Druckschriften bekannt: US-A 2 996 551, US-A 2 792 352, US-A 2 792 357, US-A 3 383 326, US-A 3 676 501, EP-A 055 433 und EP-A 055 434.

Insbesondere ist aus der EP-A 265 225 bekannt, eine Triol-Verbindung mit mindestens einem mol Alkylenoxid reagieren zu lassen und das Verfahrensprodukt in der Menge mit Bisphenol-A-diglycidylether umzusetzen, daß zwei mol Hydroxylgruppen auf 1 mol des Glycidylethers entfallen. Die erhaltenen Polyetherpolyole weisen Molekulargewichte zwischen 2000 und 7000 auf.

Des weiteren ist aus der US-A 4 309 532 bekannt, ein Amin mit einem Hartschaum-Polyol-Initiator, der mindestens 4 mol aktiven Wasserstoff enthält, zu mischen, diese Mischung mit mindestens einem mol Epoxid umzusetzten und mindestens 2 mol des Verfahrensproduktes mit 1 mol eines Bisphenol-A-diglycidylethers reagieren zu lassen.

Gemäß der Lehre der EP-A 130 405 kann ein Polyol mit einem durchschnittlichen Molekulargewicht von mindestens 500 mit einer Verbindung, die zwei Epoxy-Gruppen enthält, zu einer Verbindung mit einem Molekulargewicht von mindestens 5000 umgesetzt werden. Die erhaltenen Polyetherole dienen zur Herstellung von Polyurethanen.

Die DE-A 22 20 723 beschreibt die Herstellung von Polyalkylenethern mit modifizierten Endgruppen durch Polymerisation von Alkylenoxiden in Gegenwart von basischen Katalysatoren und anschließender Modifikation des alkalihaltigen Verfahrensproduktes mit Verbindungen, die Halogenmethyl-, Halogenmethylen- oder Halogenethylgruppen tragen.

Aus der DE-A 32 33 251 sind asymmetrische Polyetherole mit einer Hydroxylzahl von 15 bis 112 bekannt, die durch Überführung einer Verbindung mit 3 bis 8 mol aktiven Wasserstoff in ein Polyoxyalkylenpolyol, Umsetzung von 1 mol dieses Zwischenproduktes mit 0,1 bis 2 mol einer difuktionellen Verbindung, die eine Epoxy- und eine Hydroxylgruppe enthält, und gewünschtenfalls anschließender Alkylierung des Verfahrensproduktes herstellbar sind. Die genannten Polyetherole eignen sich zur Herstellung von Polyurethan-Kunststoffen, insbesondere von Halbhart- und Hartschäumen.

Die aus den bekannten Polyetherolen unter anderem hergestellten Polyester und Polyurethane können

in ihren physikalischen Eigenschaften nicht immer voll befriedigen. Insbesondere weisen die Eduktmischungen für Polyurethan-Hartschaumstoffe, die ohne Verwendung von Fluorchlorkohlenwasserstoffen als Treib- und Verdünnungsmittel hergestellt wurden, eine höhere Viskosität und ein schlechteres Härtungsverhalten auf. Der Erfindung lagen daher neue Polyetherole als Aufgabe Zugrunde, die die Eigenschaften von Polyurethan-Eduktmischungen verbessern.

Demgemäß wurden die neuen niederviskosen hochfunktionellen Polyetherole gefunden.

Bei der Ausgangsverbindung I handelt es sich allgemein um eine organische Verbindung oder um ein Gemisch aus mehreren organischen Verbindungen mit jeweils funktionellen Gruppen, die mit Epoxiden unter Ether- und Polyetherbildung reagieren können. Erfindungsgemäß werden solche Ausgangsverbindungen verwendet, die ein Molekulargewicht bis etwa 400 g/mol aufweisen und die n = 2-8 Hydroxylgruppen, Thiolgruppen und/oder sekundäre Aminogruppen und/oder n = 1-4 primäre Aminogruppen, bevorzugt Hydroxyl- und/oder primäre Aminogruppen, tragen.

Beispiele für derartige Ausgangsverbindungen sind di- bis oktafunktionelle Hydroxyverbindungen wie mehrwertige Alkohole, insbesondere Diole wie Ethylenglykol, 1,2-Propylenglykol, 1,3-Propylenglykol, Diethylenglykol, Dipropylenglykol, 1,4-Butylenglykol und 1,6-Hexamethylenglykol, Triole wie Glycerin und Trimethylolpropan, Tetraole wie Pentaerythrit, Hexaole wie Sorbit und Octaole wie Saccharose sowie di- bis oktafunktionelle Amine, insbesondere difunktionelle Amine, z.B. aliphatische Monoamine wie Methylamin, Ethylamin, Isopropylamin und Butylamin oder aromatische Monoamine wie Anilin, Benzylamin, o-, m-, p-Toluidin und $\alpha$-, $\beta$-Naphthylamin, trifunktionelle Amine wie Ammoniak, tetrafunktionelle Amine, z.B. aliphatische Diamine wie Ethylendiamin, 1,3-Propylendiamin, 1,3- und 1,4-Butylendiamin, 1,2-, 1,3-, 1,4-, 1,5- und 1,6-Hexamethylendiamin oder aromatische Diamine wie o-, m-, p-Phenylendiamin, 2,4-, 2,6-Toluylendiamin, 2,2'-, 2,4'- und 4,4'-Diaminodiphenylmethan, pentafunktionelle Amine wie Diethylentriamin und hexafunktionelle Amine wie Triethylentetramin.

Ganz besonders bevorzugt werden trifunktionelle Hydroxyverbindungen wie Glycerin und Trimethylolpropan.

Als Epoxide kommen allgemein die Epoxide von $C_2$-$C_8$-Monoolefinen wie Ethylen, 1,2-Propylen$_1$ 1,2-Butylen und 2,3-Butylen, von Styrol, p-Chlorstyrol, p-Methylstyrol und von Cyclohexen in Betracht. Bevorzugt werden Ethylenoxid und 1, 2-Propylenoxid.

Als Basen eignen sich beispielsweise Alkalimetallalkoxide mit 1 bis 4 Kohlenstoffatomen im Alkylteil wie Natriummethylat, Natriumethylat, Kaliumethylat, Kaliumisopropylat und Natriumbutylat, Erdalkalimetallhydroxide wie Calciumhydroxid und bevorzugt Alkalimetallhydroxide wie Lithiumhydroxid und besonders bevorzugt Natrium- oder Kaliumhydroxid.

Die Anlagerung der Epoxide II im Verfahrensschritt (a) erfolgt wie üblich, gewünschtenfalls unter Zusatz eines inerten Lösungs- oder Verdünnungsmittels wie Ethylenglykoldimethylether. Die Reaktionstemperatur liegt im allgemeinen zwischen 80 und 160 °C, insbesondere zwischen 100 und 140 °C.

Für die Umsetzung empfiehlt sich das Arbeiten unter Atmosphärendruck oder bei einem erhöhten Druck zwischen 1 und 20 bar, insbesondere zwischen 1 und 6 bar.

Normalerweise überführt man die Ausgangsverbindung mit Hilfe der Base zunächst partiell in ihr Salz, wobei man die aus der Base eventuell entstehenden leichtflüchtigen Substanzen wie Wasser oder niedrig siedende Alkohole, zweckmäßigerweise unter vermindertem Druck bei einer Temperatur zwischen etwa 80 und 120 °C, abdestilliert. Die Anlagerung von 2 Molekülen des Epoxides an eine primäre Aminogruppe bzw. von 1 Molekül des Epoxides an eine sekundäre Aminogruppe gelingt auch ohne Base rasch, so daß man als Ausgangsverbindungen auch Vorkondensate einsetzen kann, die aus einem Amin und einem Molekül Epoxid pro Stickstoff-Wasserstoff-Bindung in einem getrennten Verfahrensschritt hergestellt wurden.

Im allgemeinen ist eine Menge von 0,01 bis 0,25 mol an Base pro Moläquivalent Hydroxylgruppen der Ausgangsverbindung oder des Vorkondensates (aus Amin und Epoxid) ausreichend.

Das Epoxid wird vorteilhaft in dem Maße, wie es abreagiert, in das vorgelegte Gemisch eingebracht, wofür je nach den eingesetzten Eduktmengen etwa 1 bis 10 Stunden benötigt werden.

Es können auch Gemische mehrerer Epoxide verwendet werden oder mehrere verschiedene Epoxide nacheinander zur Abreaktion gebracht werden, wobei Blockcopolymere resultieren.

Normalerweise verwendet man die 1- bis 10-fache Menge, insbesondere die 1- bis 5-fache Menge, an Epoxid pro Hydroxylgruppe der Ausgangsverbindung bzw. pro Stickstoff-Wasserstoff-Bindung bei Aminen als Ausgangssubstanzen.

Falls erforderlich, wird das Umsetzungsprodukt des Verfahrensschrittes (a) oder ein Gemisch aus mehreren dieser Umsetzungsprodukte im folgenden Verfahrensschritt mit einer weiteren Menge an Base versetzt, so daß durchschnittlich mindestens 2 Hydroxylgruppen pro Polymermolekül als Alkoholatgruppen vorliegen. Anschließend entfernt man niedrigsiedende Bestandteile wie Wasser und kurzkettige Alkohole.

Allgemein werden 0,1 bis 1 mol an Base pro Moläquivalent an aktivem Wasserstoff in der Ausgangsverbindung I, benötigt.

Für die weitere Umsetzung der Alkoholatgruppen enthaltenden Umsetzungsprodukte (aus Ausgangsverbindung I und Epoxiden II) mit q-wertigen Verbindungen III gemäß dem Verfahrensschritt (c) kommen insbesondere solche Substanzen in Betracht, die Epoxyreste und/oder Halogenatome tragen. Im Einzelnen eigenen sich als q-wertige Verbindungen III

- Verbindungen, die ausschließlich Epoxyreste tragen, insbesondere difunktionelle Verbindungen (q = 2) wie Resorcindiglycidylether, 1,4-Butandiglycidylether, 1,6-Hexandiglycidylether Neopentyldiglycidylether, Polypropylenoxiddiglycidylether, Polytetramethylenoxiddigly-cidylether, Bisphenol-A-diglycidylether und Bisphenol-F-diglycidylether;
- Verbindungen, die ausschließlich Halogenatome, bevorzugt Chlor- und/oder Bromatome, tragen, insbesondere difunktionelle Verbindungen (q = 2) wie Dichlormethan, Dibrommethan, 1,1-Dichlorethan, 1,1-Dibromethan, 1,2-, 1,3-und 1,4-Bis(chlormethyl)benzol, 1,2-, 1,3- und 1,4-Bis(brommethyl)-benzol, Bis(chlormethyl)ether, 4,4'-Bis(chlormethyl)diphenylether und Bis(chlormethyl)keton, trifunktionelle Verbindungen (q = 3) wie Trichlormethan und Trichlortriazin sowie tetrafunktionelle Verbindungen (q = 4) wie Tetrachlormethan;
- Verbindungen, die Epoxyreste und Halogenatome, bevorzugt Chlor- oder Bromatome, tragen, insbesondere difunktionelle Verbindungen (q = 2) wie Epichlorhydrin.

Ganz besonders bevorzugt sind difunktionelle Verbindungen (q = 2) wie 1,4-Butandiglycidylether, Bisphenol-A-diglycidylether, Dibrommethan, Bis(chlormethyl)benzol und Epichlorhydrin sowie Trichlortriazin unter den trifunktionellen Verbindungen (q = 3).

In der Regel beträgt die Menge an q-wertiger Verbindung III mindestens 1/3 der molaren Menge an Ausgangsverbindung I.

Der Verfahrensschritt (c) kann in einem inerten Lösungs- bzw. Verdünnungsmittel wie Ethylenglykoldimethylether durchgeführt werden.

Die Reaktionstemperatur liegt normalerweise zwischen 20 und 160 °C, insbesondere zwischen 60 und 100 °C.

Bezüglich des Druckes gelten die Angaben für den Verfahrensschritt (a).

Nach beendeter Umsetzung wird das Reaktionsgemisch in üblicher Weise, entweder mit anorganischen Säuren wie Schwefelsäure und Phosphorsäure oder mit organischen Säuren wie Zitronensäure, neutralisiert.

Die niederviskosen hochfunktionellen Polyetherole können danach in an sich bekannter Weise durch Behandlung mit Adsorptionsmitteln wie Magnesiumsilikat gereinigt werden.

Die erfindungsgemäßen Polyetherole weisen im allgemeinen eine mittlere Hydroxylzahl zwischen 100 und 700 pro Gramm Substanz, insbesondere zwischen 300 und 500, und eine durchschnittliche Funktionalität zwischen 3 und 8, vorzugsweise zwischen 4 und 6 auf.

Die erfindungsgemäßen Polyetherole weisen im Vergleich zu Polyetherolen, die aus gleichen Ausgangsverbindungen I und Epoxiden II hergestellt wurden, eine bessere Vernetzbarkeit mit Isocyanaten bei vergleichbarer oder niedrigerer Viskosität auf.

Sie eignen sich zur Herstellung von Polyurethankunststoffen und -schäumen, insbesondere von Polyurethanhartschäumen.

Die Herstellung der Polyurethane erfolgt dabei in an sich bekannter Weise durch Umsetzung von organischen mehrwertigen Isocyanten mit den erfindungsgemäßen Polyetherolen, wobei die Reaktionstemperatur üblicherweise zwischen 50 und 300 °C liegt.

Als mehrwertige Isocyanate können alle herkömmlichen für Polyurethane eingesetzten Isocyanate verwendet werden, wie z.B. 4,4'- und 2,4'-Diphenylmethandiisocyanat, Polyphenyl-polymethylen-polyisocyanate. 2,4-Toluylendiisocyanat, 2,6-Toluylendiisocyanat, Naphthalindiisocyanat, Hexamethylendiisocyanat, Isophorondiisocyanat, 2-(3-Isocyanatopropyl)-cyclohexylisocyanat und kernhydriertes 4,4'-Diphenylmethandiisocyanat sowie Mischungen der genannten Isocyanate, wie z.B. Mischungen aus 2,4'- und 4,4'-Diphenylmethan-diisocyanaten, Mischungen aus Diphenylmethan-diisocyanatisomeren und Polyphenyl-polymethylen-polyisocyanaten (Roh-MDI) und Mischungen aus Toluylen-diisocyanat-Isomeren und Roh-MDI.

Herstellungsbeispiele

Die Beispiele wurden mit den folgenden Umsetzungsprodukten, hergestellt gemäß dem Verfahrensschritt (a) aus einer Ausgangsverbindung I und Epoxiden II, durchgeführt:

A) Sucrose/Glycerin/Wasser (34:31:35 mol-%) - Propylenoxid-Polymerisat; Hydroxylzahl (nach DIN 52 240): 400 mg KOH/g, Viskosität (nach DIN 51 550): 5400 mPa•s/25 °C, Dichte (nach DIN 51 757): 1,09

$g/cm^3$ bei 25°C (Lupranol® 3321 der Fa. BASF AG);
B) Glycerin-Propylenoxid-Polymerisat; Hydroxylzahl: 400 mg KOH/g, Viskosität: 365 mPa•s/25°C, Dichte: 1,05 $g/cm^3$ bei 25°C (Lupranol® 3300).

Beispiele 1

3000 des Umsetzungsproduktes A (enthaltend 136 mmol Alkoholatgruppen) wurden bei 80°C mit 9,8 g (106 mmol) Epichlorhydrin zur Reaktion gebracht. Nach einer Reaktionsdauer von 7 Stunden gab man 3 Gew.- % (bezogen auf A) Magnesiumsilikat (als Adsorptionsmittel) und 1 Gew.-% Wasser zu der Reaktionsmischung. Anschließend wurden die festen Bestandteile abgetrennt, getrocknet und mit 1500 ppm 2,6-Di-tert.-butyl-4-methylphenol stabilisiert. Restgehalt an Alkalimetallionen: 1,4 ppm; Hydroxylzahl: 407 mg KOH/g; Viskosität: 5798 mPa•s/25°C.

Beispiel 2

In einem 10 l Oxalkylierungsreaktor wurden 690 g (7,5 mol) Glycerin und 62,2 g 45 gew.-%ige wäßrige Kaliumhydroxid-Lösung unter reduziertem Druck (30 mbar) solange auf 90°C erhitzt, bis das vorhandene Wasser quantitativ entfernt war. Das entstandene Alkoholat wurde bei 110°C mit 870 g (15 mol) Propylenoxid umgesetzt. Danach wurden noch 220 g (5 mol) Ethylenoxid aufpolymerisiert. Nach Beendigung der Reaktion entfernte man nicht umgesetzte Monomere bei 110°C unter reduziertem Druck. Das Umsetzungsprodukt wurde anschließend bei 50°C mit 550 g (2,7 mol) Butandioldiglycidylether zur Reaktion gebracht. Nach einer Reaktionszeit von 20 Stunden wurde eine Stunde lang Vakuum angelegt, wonach man das Reaktionsgemisch mit 60 g Magnesiumsilikat (als Adsorptionsmittel) und, zum Herauslösen von Alkalimetallionen, mit 30 g Wasser versetzte. Man rührte noch eine Stunde und trennte dann die festen Bestandteile mittels Druckfilterpresse ab. Das Produkt wurde 2 Stunden im Hochvakuum getrocknet. Ausbeute 2330 g; durchschnittliche Funktionalität: 4,5; Hydroxylzahl: 564 mg KOH/g; Viskosität: 2262 mPa•s/25°C.

Beispiel 3

Beispiel 2 wurde mit folgenden Mengenverhältnissen wiederholt:

| | |
|---|---|
| Glycerin: | doppelte Menge; |
| Kaliumhydroxid-Lösung: | vierfache Menge; |
| Propylenoxid: | vierfache Menge; |
| Ethylenoxid: | doppelte Menge; |
| Butandioldiglycidylether: | doppelte Menge; |

Adsorptionsmittel und Wasser: jeweils die doppelte Menge; Ausbeute: 6330 g; durchschnittliche Funktionalität: 4,5; Hydroxylzahl: 377 mg KOH/g; Viskosität: 1460 mPas/25°C.

Beispiel 4

Zu 2000 g des Umsetzungsproduktes B, das noch 0,2 Gew.-% Kaliumhydroxid als basischen Katalysator enthielt, wurden bei 80°C 340 g (1 mol) Bis-phenol-A-diglycidylether gegeben. Nach einer Reaktionsdauer von 10 Stunden bei 100°C wurde das Gemisch analog analog Beispiel 2 auf das Produkt hin aufgearbeitet. Ausbeute: 2310; durchschnittliche Funktionalität: 4,3; Hydroxylzahl: 350 mg KOH/g; Viskosität: 3650 mPas/25°C.

Beispiele 5 bis 9

Analog Beispiel 2 wurden 1380 g (15 mol) Glycerin mit x g 45 gew.-%iger wäßriger Kaliumhydroxidlösung in das Alkoholat überführt, wonach dieses mit 3480 g (60 mol) Propylenoxid und y g Ethylenoxid umgesetzt wurde. Zu dem erhaltenen Umsetzungsprodukt gab man bei 60°C z g Epichlorhydrin, erhitzte anschließend t Stunden auf 100°C und reduzierte danach den Druck für 2 Stunden auf unter 30 mbar. Zur Neutralisation von überschüssigem Kaliumhydroxid gab man 52 g 85 %iger wäßriger Phosphorsäure in die Reaktionsmischung, nach 1 Stunde noch 100 g Magnesiumsilikat (als Adsorptionsmittel) und, zum Herauslösen von Alkalimetallionen, 60 g Wasser. Die Aufarbeitung erfolgte analog Beispiel 2. Die Einzelheiten dieser Beispiele sind Tabelle 1 zu entnehmen.

Tabelle 1

| Bsp. Nr | x | y | z | t [h] | f 1) | OH-Zahl | Viskosität bei 25° C |
|---|---|---|---|---|---|---|---|
| 5 | 685 g | 440 g 2) | 463 g | 15 | 4,0 | 387 | 1224 mPa•s |
| 6 | 809 g | 440 g 2) | 555 g | 10 | 4,3 | 373 | 1479 mPa•s |
| 7 | 1057 g | 352 g 2) | 740 g | 15 | 5,3 | 360 | 1469 mPa•s |
| 8 | 685 g | 440 g 3) | 463 g | 10 | 4,2 | 395 | 1050 mPa•s |
| 9 | 685 g | 440 g 4) | 463 g | 20 | 4,2 | 391 | 1009 mPa•s |

1) durchschnittliche Funktionalität;
2) Zugabe nach beendeter Reaktion des Propylenoxids;
3) Zugabe zusammen mit dem Propylenoxid;
4) Zugabe vor der Umsetzung mit Propylenoxid.

Anwendungsbeispiele

Mit den erfindungsgemäßen hochmolekularen Polyetherpolyolen (Beispiele 2 bis 7) wurden Polyurethan-Hartschaumstoffe hergestellt.

Als Vergleich dienten zwei Polyurethan-Hartschaumstoffe, hergestellt unter Verwendung der folgenden üblichen Polyetherpolyole:

Vergleichs-Polyetherpolyol C: hergestellt aus Glycerin und Propylenoxid; Hydroxylzahl 400 mg KOH/g, Viskosität 365 mPa•s/25° C, Dichte: 1,05 g/cm$^3$ bei 25° C (Lupranol® 3300);

Vergleichs-Polyetherpolyol D: hergestellt aus Sorbitol/Propylenglycol und Propylenoxid; Hydroxylzahl 490 mg KOH/g, Viskosität 18750 mPa•s/25° C, Dichte: 1,09 g/cm$^3$ bei 25° C; berechnete durchschnittliche Funktionalität 5,3 (Lupranol® 3422);

Vergleichs-Polyetherpolyol E: hergestellt aus Sucrose/Glycerin/Wasser und Propylenoxid; Hydroxylzahl 400 mg KOH/g, Viskosität 5400 mPa•s/25° C, Dichte 1,09 g/cm$^3$ bei 25° C; berechnete durchschnittliche Funktionalität 4,3 (Lupranol® 3321);

Polyetherpolyol F: hergestellt aus Triethanolamin/Zucker und Propylenoxid; Hydroxylzahl 500 mg KOH/g, durchschnittliche Funktionalität 4,6 (Lupranol® VP 9099).

Zur Herstellung der Polyurethane wurden die o.g. Polyetherole B bis D jeweils zusammen mit 55 Gew.-Teilen des Polyetherpolyols F, 1,9 Gew.-Teilen Wasser, 1,4 Gew.-Teilen eines handelsüblichen Polysiloxan-Polyether-Blockcopolymers (Tegostab® B 8408 der Fa. Th. Goldschmidt AG), 38 Gew.-Teilen eines handelsüblichen Treibmittels auf Basis von Trichlormonofluormethan (Kaltron 11 der Fa. Kali-Chemie), 1,4 bis 1,8 Gew.-Teilen Dimethylcyclohexylamin (DMCHA) als Katalysator sowie 143 Gew.-Teilen Roh-MDI (Gehalt an Isocyanatgruppen: 31 Gew.-%) 10 Sekunden intensiv gerührt.

Die Startzeit betrug bei allen Polyetherolen 15 bis 17 sec., die Abbindezeit 72 bis 74 sec. Geprüft wurde der Härtungsverlauf bei vergleichbaren Start- und Abbindezeiten (mit einem halbrunden Eindruckstempel; Durchmesser 2 cm) sowie die Druckfestigkeit parallel und senkrecht zur Steigrichtung des Polyurethanschaumes. Die Ergebnisse der Schäumversuche sind Tabelle 2 zu entnehmen.

Tabelle 2

| Bsp. | Viskosität [mPa·s/25°C] | Druckfestigkeit nach 3 min [N/cm] | Druckfestigkeit nach 5 min [N/cm] | Druckfestigkeit nach DIN 53 421 parallel*) [kPa] | Druckfestigkeit nach DIN 53 421 senkrecht [kPa] | Dichte [g/l] |
|---|---|---|---|---|---|---|
| 2 | 2262 | 26,4 | 54,2 | 90,8 | 29,3 | 23,5 |
| 3 | 1460 | 18,5 | 52,4 | 152 | 56,2 | 18,7 |
| 4 | 3650 | 15,5 | 51,9 | 115 | 46 | 22,0 |
| 5 | 1224 | 18,6 | 55,4 | 176 | 59,4 | 19,4 |
| 6 | 1479 | 20,2 | 57,5 | 136 | 55,2 | 18,9 |
| 7 | 1469 | 17,5 | 51,1 | 129 | 51,8 | 19,1 |
| C | 365 | 13 | 50,5 | 118 | 38,8 | 22,3 |
| D | 18000 | 27 | 53,4 | 96,2 | 58,8 | 23,0 |
| E | 5550 | 21,1 | 54,2 | 142 | 58,8 | 19,1 |

*) zur Schäumrichtung

Die erfindungsgemäßen Polyetherole reduzieren die Gesamtviskosität der Polyurethan-Eduktmischung und verbessern deren Härtungsverhalten. Dadurch wird die Eduktmischung, insbesondere bei Abwesenheit eines Halogenkohlenwasserstoffesals Verdünnungs- und Treibmittel, besser handhabbar. Das bessere Härtungsverhalten ermöglicht außerdem kürzere Formstandzeiten. Mit Vergleichspolyol C werden, obwohl es eine noch niedrigere Viskosität als die erfindungsgemäßen Polyetherole aufweist, Polyurethanschäume mit schlechterem Härtungsverhalten erhalten. Mit den Vergleichspolyolen D und E werden zwar Schäume mit gleich gutem oder besserem Härtungsverhalten erzielt, jedoch führt die erhöhte Viskosität dieser beiden Polyetherole zu höher viskosen und deshalb schwer handhab- und schäumbaren Polyurethan-Eduktmischungen.

## Patentansprüche

1. Niederviskose hochfunktionelle Polyetherole, erhältlich durch Umsetzung von 1 mol einer Ausgangsverbindung I, die n = 2 bis 8 mol aktiven Wasserstoff in Form von Hydroxylgruppen, Thiolgruppen, primären Aminogruppen und/oder sekundären Aminogruppen enthält und deren Molmasse bis zu 400 beträgt, mit

   a) r = n bis 10n mol eines Epoxides oder mehrerer Epoxide der allgemeinen Formel II

   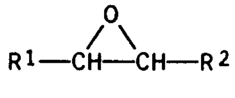

   II

   in der $R^1$ Wasserstoff oder eine $C_1$-$C_4$-Alkylgruppe und $R^2$ einen der Reste $R^1$ oder die Phenylgruppe, die noch ein oder zwei Halogenatome und/oder $C_1$-$C_4$-Alkylgruppen tragen kann, bedeutet, oder in der $R^1$ und $R^2$ gemeinsam eine Tetramethylengruppierung bedeuten, in Gegenwart einer Base,

   b) Überführung von s = 2 bis n mol der im Umsetzungsprodukt vorliegenden Hydroxylgruppen in Alkalimetallalkoholatgruppen und

   c) weitere Umsetzung des nach Stufe (b) erhaltenen Produktes oder eines Gemisches mehrerer dieser Produkte mit p mol einer q-wertigen Verbindung III, wobei p mindestens 1/3 mol ist und die Beziehung $p \cdot q = s$ gilt und wobei die Wertigkeit durch reaktionsfähige Chloratome, Bromatome und/oder Epoxygruppen bestimmt ist,

d) Neutralisation des Reaktionsgemisches und Reinigung der Produkte in an sich bekannter Verfahrensweise,

mit der Maßgabe, daß n einen Wert von 3 bis 6 bedeutet, wenn die Verbindungen III mindestens eine Epoxygruppe und mindestens ein Chlor- oder Bromatom tragen.

**2.** Niederviskose Polyetherole nach Anspruch 1, erhältlich aus Ethylenoxid und/oder Propylenoxid als Epoxid II verwendet.

**3.** Verfahren zur Herstellung von niederviskosen hochfunktionellen Polyetherolen, dadurch gekennzeichnet, daß man 1 mol einer Ausgangsverbindung I, die n = 2 bis 8 mol aktiven Wasserstoff in Form von Hydroxylgruppen, Thiolgruppen, primären Aminogruppen und/oder sekundären Aminogruppen enthält und deren Molmasse bis zu 400 beträgt, mit

a) r = n bis 10n mol eines Epoxides oder mehrerer Epoxide der allgemeinen Formel II

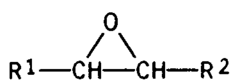

II

in der $R^1$ Wasserstoff oder eine $C_1$-$C_4$-Alkylgruppe und $R^2$ einen der Reste $R^1$ oder die Phenylgruppe, die noch ein oder zwei Halogenatome und/oder $C_1$-$C_4$-Alkylgruppen tragen kann, bedeutet, oder in der $R^1$ und $R^2$ gemeinsam eine Tetramethylengruppierung bedeuten, in Gegenwart einer Base umsetzt,

b) s = 2 bis n mol der im Umsetzungsprodukt vorliegenden Hydroxylgruppen in Alkalimetallalkoholatgruppen überführt und

c) das nach Stufe (b) erhaltene Produkt oder ein Gemisch aus mehreren dieser Produkte mit p mol einer q-wertigen Verbindung III, wobei p mindestens 1/3 mol ist und die Beziehung $p \cdot q = s$ gilt und wobei die Wertigkeit durch reaktionsfähige Chloratome, Bromatome und/oder Epoxygruppen bestimmt ist, weiter umsetzt,

d) das Reaktionsgemisch neutralisiert und die Produkte in an sich bekannter Verfahrensweise reinigt,

mit der Maßgabe, daß n einen Wert von 3 bis 6 bedeutet, wenn die Verbindungen III mindestens eine Epoxygruppe und mindestens ein Chlor- oder Bromatom tragen.

**4.** Polyurethane, erhältlich aus mehrwertigen Isocyanaten und den niederviskosen hochfunktionellen Polyetherolen I gemäß Anspruch 1.

**5.** Verfahren zur Herstellung von Polyurethanen, dadurch gekennzeichnet, daß man mehrwertige Isocyanate mit den niederviskosen hochfunktionellen Polyetherolen gemäß Anspruch 1 umgesetzt.

Europäisches Patentamt

# EUROPÄISCHER RECHERCHENBERICHT

Nummer der Anmeldung

EP 91 12 0806

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,D | US-A-4 309 532 (M. CUSCURIDA et al.) * Spalte 7, Zeilen 1-5; Spalte 2, Zeilen 53-62; Ansprüche 1-5; Beispiele 2-5 * | 1-5 | C 08 G 65/26<br>C 08 G 18/48 |
| Y,D | FR-A-2 182 070 (BASF) * Beispiele 2-5; Tabelle 1; Seite 5, Zeilen 34-36; Seite 3, Zeilen 24-26 * | 1-5 | |
| Y | DE-A-2 656 727 (BASF) * Anspruch 1; Beispiel 1 * | 1-5 | |
| X | FR-A-1 414 997 (HOECHST) * Anspruch 1; Beispiel 1 * | 1-3 | |
| A | US-A-4 587 365 (M.J. ANCHOR) * Ansprüche 1,4; Spalte 3, Zeilen 48-52 * | 1-3 | |

RECHERCHIERTE SACHGEBIETE (Int. Cl.5)

C 08 G

Der vorliegende Recherchenbericht wurde für alle Patentansprüche erstellt

| Recherchenort | Abschlußdatum der Recherche | Prüfer |
|---|---|---|
| DEN HAAG | 18-03-1992 | O'SULLIVAN T.P. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)